# EUROPEAN PATENT SPECIFICATION

(11) **EP 4 151 371 B1**
(45) Date of publication and mention of the grant of the patent: **01.07.2026**
(21) Application number: 21804878.3
(22) Date of filing: 25.01.2021
(51) Int. Cl.: B25J 5/02, H02J 7/70, B60L 53/14, B25J 11/00, B60L 53/30, H02J 7/40, B60L 53/31, B60L 53/35, B60L 53/65, H02J 7/00, B60L 53/67

(54) **VEHICLE CHARGING STATION**
FAHRZEUGLADESTATION
STATION DE RECHARGE DE VÉHICULES

(30) Priority: 14.05.2020 ES 202030911 U
(43) Date of publication of application: 22.03.2023
(73) Proprietor: Lemil, S.L., 36214 Vigo (Pontevedra) (ES)
(72) Inventor: FREIJEDO ALVAREZ, Jose Manuel, 36214 VIGO (PONTEVEDRA) (ES)
(74) Representative: García Gómez, José Donato
(86) International application number: PCT/ES2021/070052
(87) International publication number: WO 2021/229115

(56) References cited:
- CN-U- 208 993 497
- CN-U- 208 993 497
- CN-U- 209 426 594
- US-A1- 2013 057 210
- US-A1- 2019 001 831
- US-A1- 2019 061 542
- US-A1- 2019 061 542

## Description

### Object of the invention.

The present invention relates to an automated vehicle charging station that allows their recharging without the intervention of users or other personnel. In this way the recharge can be done during the night, while the driver is taking a break, etc.

### State of the art.

At the moment, in almost all developed countries, we are witnessing a transformation from fossil-fuel powered devices to other cleaner energies, such as electricity or hydrogen, which can also be produced from renewable sources. These include personal vehicles or vehicles for the transport of goods and passengers by road.

Electric vehicles are quite advanced and consequently other structural needs have arisen; mainly a new network of battery charging stalls. This network, moreover, must be denser than the current service stations since the autonomy of the new vehicles is much less than that of traditional ones. Therefore, the power distribution networks can be overloaded.

It is necessary to optimise the use of the networks, for example, avoiding requiring the charging of hundreds of thousands of vehicles at any given time. Even more so when high power is required to be able to carry out a fast recharge (while the driver takes a break on the trip, for example).

In the case of vehicle networks or fleets, most of the fleet arrives at the headquarters at a very precise time, and it is not possible to charge all in parallel, except by installing very powerful, complex and expensive equipment, and contracting a lot of power from the distributor.

This high power incidentally increases the risk to drivers, so it is preferable that the systems are automated.

A charging robot is known from US2018001777 that brings the vehicle closer by moving it along the plane. The robot is connected to a power source, which serves as a power supply to the vehicle. This system offers part of the advantages by automating the connection. However, it does not solve the overloading problem.

From the patent US 2019/ 0061542 A1 a vehicle charging station is known, comprising a track configured to extend across a plurality of vehicle parking spaces; a movable charging apparatus supported by the track and translatable along the track between the plurality of vehicle parking spaces; a contact wire extending approximately parallel to the track; being configurated the conductor pole to couple the movable charging apparatus to the first contact wire at a plurality of locations along a width of the first contact wire.

The Utility Model CN 208 993 497 U describes an electric vehicle engineering fields, provide a kind of charging system. including the charging system a charging unit, guide rail, cable and adapting device, wherein, charging unit is arranged for externally providing electric energy, guide rail across multiple parking stalls, The charging unit is used only in the charging system, and can successively be charged by sliding of the adapting device on guide rail to the electric car being parked on multiple parking stalls.

None of these documents disclosed in the state of the art describe a vehicle charging station having means of identification of the vehicle to be electrically charged.

### Description of the invention.

The invention consists of a charging station for vehicles, mainly cars, according to the claims.

The main object of the invention is the development of a station with an efficient and autonomous device for the recharging of electric vehicles and which takes into account the needs of the network. It is a station with a fully autonomous device, equipped with artificial intelligence and capable of using a single recharging stall to service multiple users in a short time.

It includes an autonomous handler or robotic arm responsible for performing the connection and recharging of each vehicle in an unsupervised manner, thus avoiding the need for the intervention of people. This robotic arm will allow the operations to be carried out autonomously and independently, deciding when it considers that the vehicle is charged and ready for use, optimising the times.

The system is mainly designed for places where the user can use several vehicles (car rental companies, companies with fleets of delivery vehicles, storage of manufactured vehicles) or where vehicles can be parked for a certain time (airports, train stations, factory vehicle storage docks...) so that the charging management and prioritisation is very important. This system prevents a charger from being disabled by the presence of the same vehicle for a long time, in addition to disconnecting the charge once completed, ensuring the service life of the vehicle battery.

The system will preferably be equipped with a database that will contain all the models of electric vehicles of the market, or of the specific fleet, so that it will know the appropriate mode and time of charging for each one. In this way the system will be able to prioritise the urgency and the time of use of the charger. The user, when removing their vehicle, will be able to see in the interface the amount of energy that has been transferred to their vehicle.

Mobile applications can also be implemented for notifying the state of charge or the expected time in which the charge will be carried out.

The invention is a step forward in the field of electric vehicle charging stalls in that it:
- Improves the use of electrical networks, by reducing the number of recharging stalls used at any given time. This avoids charging from many stalls in parallel and carries out a rapid sequential charging instead.
- Improves safety and management by reducing the presence of people and preventing them from having to handle high-powered connectors or equipment.
- Saves charging time. As charging is sequential, the device can gather all the available power in a single stall.
- Scalable design, since it only requires increasing the available space and the length of the guideway.

The device is capable of autonomously detecting the presence of a vehicle, moving the charging stall to that place and, with the assistance of a robotic arm, supplying power to the vehicle.

According to claim 1, the electric vehicle charging station comprises an area with a number of parking spaces and a structure close to these spaces that carries a series of vehicle presence sensors. These presence sensors monitor the parking spaces.

According to claim 1, the station further comprises a guideway close to the parking spaces (for example, in front of one of the smaller sides) on which a single carriage circulates. This carriage carries a recharging device and a monitoring switchboard, which perform the supply of high power electrical current to a conductor from one or more connector-bars. This conductor is carried by a robotic arm. The guideway may comprise a guard cage, with the minimum openings necessary for the passage of the robotic arm. Likewise, parking spaces can be arranged on both sides of the guideway, or only on one.

The carriage also has a sensor for its position, to ensure that the contact is correct.

These presence sensors may comprise vehicle identification means, the simplest solution being to check the license plate in a database. In the most complex solution, it recognises the vehicle model by its shape and any recognisable identification.

The high-power recharging device (100-300 kW) transforms the energy to the specific charge needs for each vehicle (alternating/direct current, kW of power demanded, operating modes in fast charging and power management capabilities...). It can be adapted to the particular characteristics of each facility, being an easily interchangeable element that allows the future evolution of the facility as the technology of these charger advances. This update will be carried out quickly as only one recharging equipment per facility must be modified.

In addition, the station has a number of static or fixed charge controllers close to the parking spaces. Each charge controller has one (claim 1) or two hoses (claim 6) with connection heads to the charge port of adjacent vehicles. As defined in claim 1, the charge controller is initially disconnected from the electrical networks and it is the robotic arm that is configured to connect the conductor to the different charge controllers, successively, in order to charge the vehicles. In this way, the switchboard is always located at a short distance from the vehicle, instead of installing a long wiring for the required power. Specifically, the length of the connection can be reduced to less than 2 meters including the hose.

According to claim 7, the charge controllers may recognise the remaining charge on the vehicle in order to, among other factors, consider the order of charge preference.

The structure can be a portico or similar roofing, so that the sensors are at the top, according to claim 2. In addition, the connector-bars may also be arranged at height, out of the reach of users, according to claim 3.

The position sensor of the carriage can be of several types: a laser distance meter to measure the distance to a fixed point at one or both ends of the guideway, as defined in claim 4, an optical system using the presence sensors.

Also, according to claim 1, the charge controllers comprise a vehicle model identification system.

### Description of the figures.

A number of figures are presented for ease of understanding of the invention:
Figure 1: Perspective view of an exemplary embodiment of the invention.

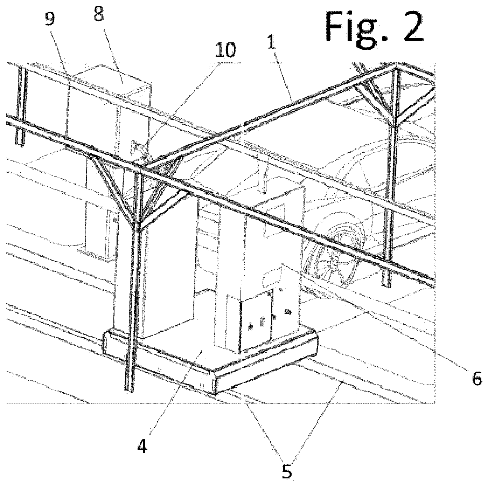

Figure 2: Rear view of the exemplary embodiment, focused on the carriage.

### Preferred embodiment of the invention.

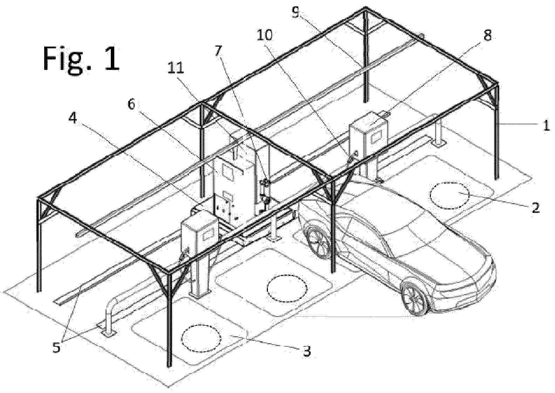

The vehicle charging station shown in the figures is based on a structure (1), which carries a set of sensors (2) for the presence of vehicles. The sensors can be traditional, infrared cameras or induction sensors for the presence of vehicles (Figure 1). They can also be NFC detectors or similar for detecting labels or objects carried by the vehicle or people, which will be located precisely thanks to triangulation, not being part this feature of the present invention . The sensors (2) monitor an open area where parking spaces (3) are defined for the vehicles to be recharged. The structure (1) is a roofing to protect vehicles and people from the weather, to place sensitive equipment out of reach of people (mainly children) and to be able to place photovoltaic panels to power auxiliary equipment and assist, where appropriate, the charging of vehicles.

The station further comprises a high power recharging device (11), of 100-300 kW, which conditions the power supplied to the recharging conditions. The recharging device (11) is mounted on a carriage (4) movable on a guideway (5) arranged on one side of the parking spaces (3). The carriage (4) also carries a monitoring switchboard (6) and a robotic arm (7). The carriage (4) comprises a position sensor, such as a laser distance meter to measure the distance to a fixed point at one or both ends of the guideway (5).

The switchboard (6) supplies the power to all the components, taking it from connector-bars (9) that are out of the reach of the users (at height in Figure 1) for safety purposes. The switchboard (6) also includes safety equipment (switches, relays... and automatons that provide the entire device with the intelligence necessary for its proper functioning and safety).

The robotic arm (7) is responsible for autonomously recharging the vehicle, avoiding at all times the need for intervention of people. This ensures that the personnel do not handle electrical elements of such high power as the aforementioned. The robotic arm (7) will comprise a claw at its end to perform the automatic connection to and disconnection from a charge controller (8) or charging pole connectable to each vehicle.

Each parking space (3) will have a charging controller (8), which forms the recharging stall. It comprises a hose (10) with a head to connect to the vehicle and detect the charge needs and its maximum capacity. The charge controller (8) comprises a control console for the user to identify their vehicle, for example indicating the license plate for the charge controller (8) to look it up in an internal or external database. The license plate can also be detected by the sensors (2). The vehicle model may also be identified by an object or code carried by the user or vehicle. The system will also proceed to make pay the energy and notify the user of the start and end of the charge.

The user will connect the car socket to the charge controller (8), which will initially be with the minimum operating energy of its elements, which is insufficient for the charge. The charge controller (8) will measure the need for the vehicle and report it to the service management system. When it considers that it is time to charge, it will bring the carriage (4) closer and connect the robotic arm (7) to the charge controller (8) to provide the energy with high power. Once finished, or if the user interrupts the management operation, the robotic arm (7) will be disconnected and switched to another charge controller (8). The same charge controller (8) can serve two adjacent parking spaces (3).

## Claims

1. Electric vehicle charging station, comprising an area with a number of parking spaces (3) and a nearby structure (1), whereby the structure (1) carries a series of sensors (2) for the presence of vehicles that monitor the parking spaces (3) and comprises a guideway (5) close to the parking spaces (3) on which a single carriage (4) runs carrying:
- a monitoring switchboard (6) for supplying high power from one or more connector-bars (9);
- a recharging device (11) that transforms the power to the conditions required for recharging, and is connected to a conductor carried by a robotic arm (7);
- a carriage position sensor (4); **characterised in that** the electric vehicle charging station comprises a number of fixed charge controllers (8), with a hose (10) with connection head to the charge port of the vehicles adjacent to each parking space (3) so that the charge controllers (8) are disconnected from the electrical networks and the robotic arm (7) is configured to connect the conductor to the charge controllers (8) in succession, whereby the charge controllers (8) comprise a vehicle model identification system.

2. Charging station, according to claim 1, **characterised in that** the structure (1) is a roofing and the sensors (2) are at the top.

3. Charging station according to claim 1, **characterised in that** the connector-bars (9) are arranged at height.

4. Charging station according to claim 1, **characterised in that** the position sensor is a laser distance meter to measure the distance to a fixed point at one or both ends of the guideway (5).

5. Charging station according to claim 1, **characterised in that** the sensors (2) comprise vehicle identification means.

6. Charging station according to claim 1, **characterised in that** at least one charging controller (8) comprises two hoses (10) for two adjacent parking spaces (3).

7. Charging station according to claim 1, **characterised in that** the charge controllers (8) comprise a sensor for the charge present in the vehicle.

## Patentansprüche

1. Ladestation für Elektrofahrzeuge, umfassend einen Bereich mit einer Anzahl von Parkplätzen (3) und eine nahegelegene Struktur (1), wobei: die Struktur (1) eine Reihe von Sensoren (2) für die Anwesenheit von Fahrzeugen trägt, die die Parkplätze (3) überwachen, und eine Führungsschiene (5) in der Nähe der Parkplätze (3) umfasst, auf der ein einzelner Wagen (4) fährt, der Folgendes trägt:
- eine Überwachungsschalttafel (6) zum Zuführen von Hochleistung von einer oder mehreren Anschlussleisten (9);
- eine Aufladevorrichtung (11), die die Leistung in die für das Aufladen erforderlichen Bedingungen umwandelt und an einen von einem Roboterarm (7) getragenen Leiter angeschlossen ist;
- einen Wagenpositionssensor (4); **dadurch gekennzeichnet, dass** die Ladestation für Elektrofahrzeuge eine Anzahl von ortsfesten Ladesteuergeräten (8) umfasst, mit einem Schlauch (10) mit Anschlusskopf an den Ladeanschluss der Fahrzeuge, die benachbart zu jedem Parkplatz (3) sind, sodass die Ladesteuergeräte (8) von den Stromnetzen getrennt sind und der Roboterarm (7) dazu konfiguriert ist, den Leiter nacheinander an die Ladesteuergeräte (8) anzuschließen, wobei die Ladesteuergeräte (8) ein Identifizierungssystem des Fahrzeugmodells umfassen.

2. Ladestation nach Anspruch 1, **dadurch gekennzeichnet, dass** die Struktur (1) eine Überdachung ist und sich die Sensoren (2) an der Oberseite befinden.

3. Ladestation nach Anspruch 1, **dadurch gekennzeichnet, dass** die Anschlussleisten (9) in der Höhe angeordnet sind.

4. Ladestation nach Anspruch 1, **dadurch gekennzeichnet, dass** der Positionssensor ein Laserentfernungsmesser ist, um die Entfernung zu einem ortsfesten Punkt an einem oder beiden Enden der Führungsschiene (5) zu messen.

5. Ladestation nach Anspruch 1, **dadurch gekennzeichnet, dass** die Sensoren (2) Fahrzeugidentifizierungsmittel umfassen.

6. Ladestation nach Anspruch 1, **dadurch gekennzeichnet, dass** mindestens ein Ladesteuergerät (8) zwei Schläuche (10) für zwei benachbarte Parkplätze (3) umfasst.

7. Ladestation nach Anspruch 1, **dadurch gekennzeichnet, dass** die Ladesteuergeräte (8) einen Sensor für die im Fahrzeug vorhandene Ladung umfassen.

## Revendications

1. Station de recharge pour véhicules électriques, comprenant une zone comportant une pluralité de places de stationnement (3) et une structure adjacente (1), dans laquelle : la structure (1) porte une pluralité de capteurs (2) de présence de véhicules pour surveiller les places de stationnement (3) et comprend une voie de guidage (5) disposée à proximité des places de stationnement (3) sur laquelle circule un seul chariot (4) portant :
- un tableau de commande (6) destiné à fournir une puissance électrique élevée depuis une ou plusieurs barres de connexion (9) ;
- un dispositif de recharge (11) destiné à adapter la puissance électrique aux conditions requises pour la recharge, et qui est relié à un conducteur porté par un bras robotisé (7) ;
- un capteur de position du chariot (4) ;
**caractérisé en ce que** la station de recharge pour véhicules électriques comprend une pluralité de contrôleurs de charge (8) fixes, équipés d'un câble (10) muni d'une prise permettant de le brancher au port de charge des véhicules à proximité de chaque place de stationnement (3) de sorte que les contrôleurs de charge (8) soient déconnectés des réseaux électriques et que le bras robotisé (7) est configuré pour connecter le conducteur aux contrôleurs de charge (8) successivement, les contrôleurs de charge (8) comprenant un système d'identification du modèle de véhicule.

2. Station de recharge, selon la revendication 1, **caractérisée en ce que** la structure (1) est constituée par une toiture et les capteurs (2) sont situés au sommet.

3. Station de recharge selon la revendication 1, **caractérisée en ce que** les barres de connexion (9) sont disposées en hauteur.

4. Station de recharge selon la revendication 1, **caractérisée en ce que** le capteur de position est un télémètre laser configuré pour mesurer une distance par rapport à un point fixe situé à l'une ou aux deux extrémités de la voie de guidage (5).

5. Station de recharge selon la revendication 1, **caractérisée en ce que** les capteurs (2) comprennent des moyens d'identification du véhicule.

6. Station de recharge selon la revendication 1, **caractérisée en ce qu'**au moins un contrôleur de charge (8) comprend deux câbles (10) destinés à deux places de stationnement adjacentes (3).

7. Station de recharge selon la revendication 1, **caractérisée en ce que** les contrôleurs de charge (8) comprennent un capteur configuré pour déterminer un état de charge du véhicule.
